# EUROPEAN PATENT APPLICATION

(11) **EP 4 390 609 A1**
(43) Date of publication of application: **26.06.2024**
(21) Application number: 23218271.7
(22) Date of filing: 19.12.2023
(51) Int. Cl.: G05D 23/19

(54) **SYSTEM AND METHOD FOR REGULATING A WATER HEATER VIA A THERMOSTAT**

(30) Priority: 19.12.2022 US 202263476086 P
(71) Applicant: Carrier Corporation, Palm Beach Gardens, FL 33418 (US)
(72) Inventor: MANNFELD, David, Indianapolis, IN 46204 (US)
(74) Representative: Dehns

(57) **Abstract**

Embodiments of the disclosure are directed towards systems and methods for regulating a water heater (104) via a thermostat (106). The thermostat (106) comprises a receiver configured to receive one or more inputs from one or more sensors (202) configured to monitor, for a predefined duration of time, usage pattern of the water heater (104). Further, the thermostat (106) comprises a controller (208) configured to determine, via a machine learning neural network, a scheduling pattern for hot water based on the monitored usage pattern. The controller (208) is further configured to operate the water heater (104) based on the scheduling pattern.

## Description

### CROSS-REFERENCE TO RELATED APPLICATIONS

This application claims priority to U.S. Provisional Patent Application No. 63/476,086, filed Dec. 19, 2022, and entitled "System and Method for Regulating a Water Heater via a Thermostat", the disclosure of which is incorporated by reference herein in its entirety.

### FIELD OF THE INVENTION

The disclosure generally relates to water heaters, and more particularly relates to thermostats and systems and methods for regulating a water heater via a thermostat.

### BACKGROUND

Conventional heating, ventilation and air conditioning (HVAC) systems maintain temperatures in interior, or so-called "conditioned spaces." HVAC control systems are used to control the environment within a building and are also linked via the internet for web-enabled building control. Smart thermostats exist today that allow for scheduling based on manual user inputs associated with timings of hot water usage. However, these require manual set up and may need to be updated regularly via manual inputs. With the advent of artificial intelligence, the technology may be leveraged to provide a smart solution for operating water heaters via thermostats.

Accordingly, there is a need to provide a method and system to smartly manage the water heater usage for users using the smart HVAC systems.

### SUMMARY

This summary is provided to introduce a selection of concepts, in a simplified format, that are further described in the detailed description of the disclosure. This summary is neither intended to identify key or essential inventive concepts of the disclosure and nor is it intended for determining the scope of the disclosure.

Disclosed herein is a thermostat for regulating a water heater is provided. The thermostat comprises a receiver configured to receive one or more inputs from one or more sensors configured to monitor, for a predefined duration of time, usage pattern of the water heater. Further, the thermostat comprises a controller configured to determine, via a machine learning neural network, a scheduling pattern for hot water based on the monitored usage pattern. The controller is further configured to operate the water heater based on the scheduling pattern.

In one or more embodiments, the one or more sensors comprises at least one of a pressure sensor, a flow meter, and a temperature sensor.

In one or more embodiments, the thermostat may further include a memory configured to store the machine learning neural network and the inputs received from the one or more sensors.

In one or more embodiments, the thermostat may further include a communication interface configured to be in communication with the machine learning neural network stored at a cloud network.

In one or more embodiments, the receiver is further configured to receive another input from the one or more sensors configured to monitor a water usage pattern at one or more of a water inlet or a water outlet of the water heater.

In one or more embodiments, to determine the scheduling pattern, the controller is configured to determine an amount of water required to be output during operation of the water heater.

In one or more embodiments, the receiver is further configured to receive another input from the one or more sensors configured to monitor a time required for cooling down of at least one of an inlet pipe and an outlet pipe of the water heater, and wherein the controller is configured to determine the scheduling pattern based on the monitored time.

Also disclosed herein is a method for regulating a water heater by a thermostat is provided. The method comprises receiving, from one or more sensors, one or more inputs associated with monitoring of usage pattern of the water heater for a predefined duration of time. Further, the method comprises determining, by a controller via a machine learning neural network, a scheduling pattern for hot water based on the monitored usage pattern. Furthermore, the method comprises operating the water heater based on the scheduling pattern.

In one or more embodiments, the receiving further comprises receiving, from the one or more sensors, another input associated with a water usage pattern at one or more of a water inlet or a water outlet of the water heater.

In one or more embodiments, determining the scheduling pattern comprises determining an amount of water required to be output during operation of the water heater
In one or more embodiments, the method may further include receiving, from the one or more sensors, another input associated with monitoring of a time required for cooling down of at least one of an inlet pipe and an outlet pipe of the water heater, wherein determining the scheduling pattern comprises determining the scheduling pattern based on the monitored time.

In one or more embodiments, the method may further include receiving, from the one or more sensors, another input associated with monitoring a temperature of water being provided to an inlet pipe of the water heater during one or more specific time durations of a day, wherein determining the scheduling pattern comprises determining the scheduling pattern based on the monitored temperature of water.

In one or more embodiments, the method may further include receiving, from at least one internal temperature sensor, another input associated with a rate of change of temperature of water during operation of the water heater; and modifying, by the controller, an operation of the water heater based on the rate of change of temperature of water.

In one or more embodiments, the method may further include recommending, via a display interface of the thermostat, the scheduling pattern for user inputs; and operating the water heater based on the scheduling pattern in response to receipt of user inputs on the scheduling pattern.

To further clarify the advantages and features of the method and system, a more particular description of the method and system will be rendered by reference to specific embodiments thereof, which is illustrated in the appended drawings. It is appreciated that these drawings depict only typical embodiments of the disclosure and are therefore not to be considered limiting of its scope. The disclosure will be described and explained with additional specificity and detail with the accompanying drawings.

### BRIEF DESCRIPTION OF THE DRAWINGS

Certain exemplary embodiments of the invention will now be described, by way of example only. The above and other features, aspects, and advantages of the disclosure will become better understood when the following detailed description is read with reference to the accompanying drawings in which like characters represent like parts throughout the drawings, wherein:
**Figure 1** illustrates an environment for regulating a water heater via a thermostat;
**Figure 2** illustrates a schematic block diagram of a system for regulating a water heater via a thermostat;
**Figure 3** illustrates a touch display interface of the thermostat to receive inputs regarding a determined scheduling pattern for a water heater 104; and
**Figure 4** illustrates a process flow depicting a method for regulating a water heater via a thermostat.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

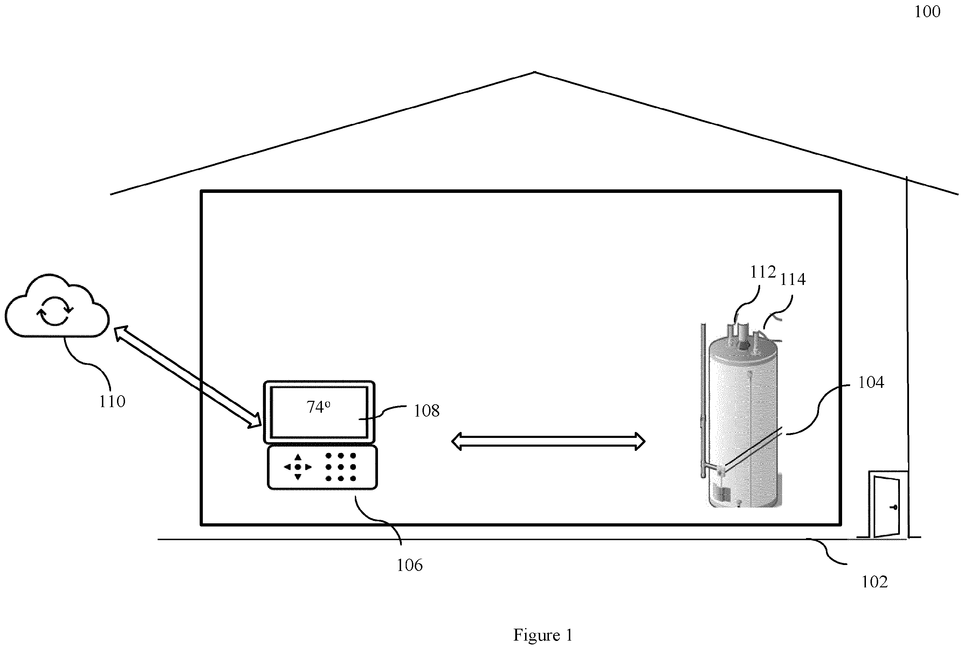

**Figure 1** illustrates an environment 100 for regulating a water heater via a thermostat.

In one exemplary embodiment, the environment 100 may include one or more areas 102. The area 102 may correspond to a living room area or a bathroom of a house. The environment 100 may correspond to a smart or IoT environment comprising one or more smart devices, such as, but not limited to, a water heater 104 and a thermostat 106, as discussed herein. Such area is shown only for illustrative purposes, and a person skilled in the art would understand that the environment may include other areas as well, without departing from the scope of the disclosure. Further, in alternative embodiments, instead of a smart home, an office environment or the like comprising one or more aforementioned devices may correspond to environment 100 or area 102.

In an embodiment, the water heater 104 may include at least one water inlet 112 for receiving the water for heating, and at least one water outlet 114 to provide the hot water as an output for usage. The water heater 104 may further include one or more sensors (not shown) for monitoring a water usage pattern at the water inlet and the water outlet for a predefined time duration. In an exemplary embodiment, the one or more sensors may include real time monitoring sensors, such as, but not limited to, a pressure sensor, a flow meter, and a temperature sensor. The sensors may be installed at the water inlet 112 and water outlet 114 of the water heater 104. In an embodiment, the one or more sensors may be in communication with a controller at the water heater 104 to monitor various parameters associated with water usage pattern at the water heater.

The sensors may be configured to monitor the usage pattern of the water heater for 104 a predefined period of time. In an exemplary embodiment, the sensors may be configured to monitor a water usage pattern for a predefined number of days from its installation in the environment 100 to capture associated data. Further, the sensors may be configured to monitor the water usage pattern at the water heater 104 during regular operation of the water heater 104 to keep monitoring changes in water usage pattern of the user(s). To monitor water usage pattern, the sensors may be configured to monitor a volume of water at the water inlet 112 (e.g., a water inlet pipe). Further, the sensors may be configured to monitor a volume at each specific time duration of the day. For example, the water may have a higher volume during morning time, while the volume of water may be low during afternoon in an apartment complex.

Further, the sensors may be configured to monitor a volume of water at the water outlet 114 (e.g., a water outlet pipe). Further, the sensors may be configured to monitor the volume at the outlet pipe at each specific time duration of the day. For example, users may need a higher volume of heated water during morning time, while there may be a lesser need for heated water during afternoon or night hours of the day.

Furthermore, the sensors may be configured to monitor a temperature of the water at the water inlet during different time periods of the day. For example, the water at the water inlet may already be heated during afternoon as compared to water received during morning or night-time.

Furthermore, the sensors may be configured to monitor the temperature of the water inlet pipe and/or the water outlet pipe. In one embodiment, the sensors may be configured to monitor a time required for heating/cooling down of one of the water inlet pipe and the water outlet pipe. The water inlet/outlet pipes may be heated/cooled due to water coming in or going out at the water heater 104. In another embodiment, the sensors may monitor a temperature of the water inlet pipe and/or the water outlet pipe, and a controller at the thermostat 106 may be configured to estimate a time required for heating/cooling down of at least one of an inlet pipe and an outlet pipe of the water heater. The monitoring of temperature of water inlet/outlet pipes may impact a time required for heating of water during operation of the water heater 104.

Furthermore, the sensors may include at least one internal temperature sensor, for example, inside a water tank of the water heater 104. The at least one internal temperature sensor may be configured to determine a rate of change of temperature of water during operation of the water heater 104. Based on the rate of change of temperature of water, the operation of water heater 104 may be regulated and total time duration required for heating of water at a desired temperature may be determined.

In one embodiment, the water heater 104 may be in communication with the thermostat 106 via a wired communication interface or a wireless communication interface. The wireless transmissions from the water heater 104 to the thermostat 106 may be performed via Wi-Fi or WLAN under IEEE Communication Standard 802.11, or any other well-known wireless communication system. The sensors of the water heater 104 may be configured to provide inputs/data associated with the water usage pattern and various parameters associated with operation of the water heater 104 to the thermostat 106, such as usage pattern of the water heater for the predefined period of time, monitored volume of water at water inlet 112 and water outlet 114 during different time durations of the day, monitored temperature of the water inlet pipe and/or the water outlet pipe, and the monitored rate of change of water.

Subsequently, the thermostat 106 may be configured to process the received input data using a trained machine learning (ML) model comprising a neural network. The neural network may include a plurality of neural network layers. Each layer has a plurality of weight values and performs a neural network layer operation through calculation between a result of computation of a previous layer and an operation of a plurality of weights. In particular, the thermostat 106 may include one or more ML based artificial intelligence models that are used by the thermostat 106 for processing of the received input data associated with the sensors and determine a scheduling pattern of hot water for the water heater 104.

In one embodiment, the ML model may be stored locally at the thermostat 106 to process the inputs and provide a scheduling pattern as an output. In another embodiment, the ML model may be stored at a cloud network 110. In this embodiment, the inputs received from the sensors may be transmitted to the cloud network 110, where a scheduling pattern may be determined and transmitted back to the thermostat 106.

To determine the scheduling pattern, the thermostat 106 may be configured to consider the parameters received with the inputs from the sensors. Specifically, the thermostat 106 may determine the scheduling pattern based on usage pattern of the water heater 104 for the predefined period of time, monitored volume of water at water inlet 112 and water outlet 114 during different time durations of the day, monitored temperature of the water inlet pipe and/or the water outlet pipe, and the monitored rate of change of water. Further, the scheduling pattern may include a time of operation for each day of the water heater 104, a desired range of temperature required for the users, a duration for which the water may be heated. In one embodiment, the scheduling pattern may vary based on a season of the year.

Additionally, the ML models may be continuously updated based on inputs received from the one or more sensors over a period of time during operation of the water heater 104. For example, the sensors may monitor water usage pattern and changes to the scheduling pattern performed by the user during manual operation. The thermostat 106 may be configured to update the neural network by adjusting one or more weights and provide an updated scheduling pattern for water usage at the water heater 104.

Further, in an embodiment, the thermostat 106 may comprise a touch display screen 108 for user interaction and receiving one or more inputs or commands or instructions. In particular, the thermostat 106 may be configured to provide the determined scheduling pattern for user inputs or confirmation. Further, the thermostat 104 may be configured to receive, via the touch display screen 108, an input to change one or more parameters in the determined scheduling pattern. Based on the user inputs on the determined scheduling pattern, the determined scheduling pattern may be updated to regulate the operation of the water heater 104. Specifically, a user may access the touch display screen 108 on the thermostat 106 to select an option associated with confirming the determined scheduling pattern or provide inputs to modify one or more parameters of the determined scheduling pattern.

Further, once the scheduling pattern is determined using the neural network and/or based on user inputs via the display screen 108, the thermostat 106 may be configured to operate the water heater 104 based on the determined scheduling pattern. Thus, the water heater 104 may be operated automatically without any user intervention to provide an optimal level of heated water during the user's preferred time and preferred temperature.

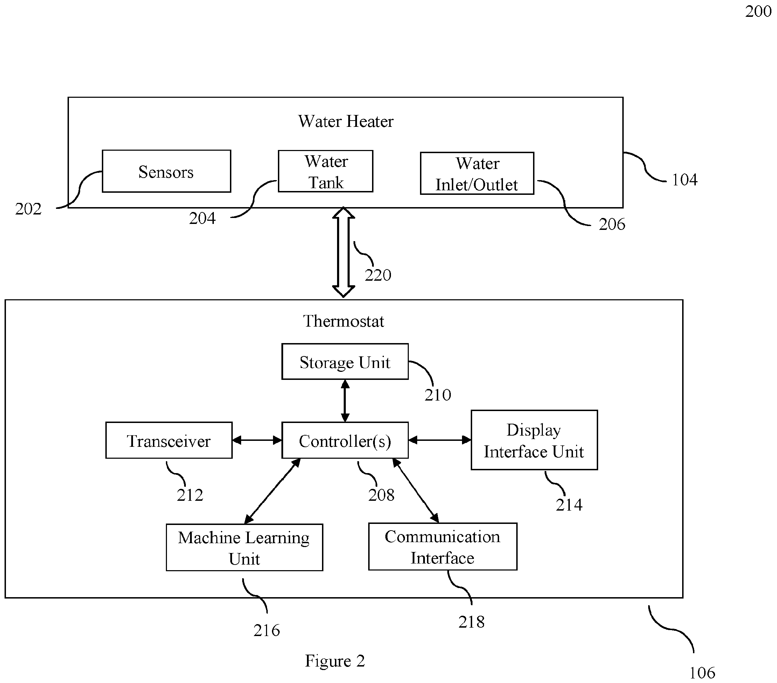

**Figure 2** illustrates a schematic block diagram of a system 200 for regulating a water heater 104 via a thermostat 106. As illustrated, an apparatus of the water heater 104 may include one or more sensors 202, a water tank 204, and one or more water inlets/outlets 206. Further, an apparatus of the thermostat 106 may include controller(s) 208, a storage unit 210, a transceiver 212, a display interface unit 214, a machine learning unit 216, and a communication interface 218.

In one embodiment, the sensors 202 of the water heater 104 may be configured to monitor the usage pattern of the water heater for a predefined period of time. In an exemplary embodiment, the sensors 202 may include real time monitoring sensors, such as, but not limited to, a pressure sensor, a flow meter, and a temperature sensor. The sensors 202 may be installed at the water inlet/outlet 206 of the water heater 104. Further, the sensors 202 may include at least one internal temperature sensor, for example, inside a water tank 204 of the water heater 104. The water inlet and/or outlet 206 may include one or more pipes for receiving cold water and providing hot water respectively. Further, the water tank 204 of the water heater 104 may be configured to store and heat the water for usage.

In one embodiment, the transceiver 212 of the thermostat 106 may include a transmitter and a receiver, and may be configured to communicate with the water heater 104 using a communication protocol for wired and/or wireless transmission. The receiver may be configured to receive inputs from the sensors 202 associated with monitored water usage pattern. Further, the transceiver 212 may forward the received inputs to the controller(s) 208 for further processing and determining a scheduling pattern.

The controller(s) 208 may be configured to process the inputs received from the sensors and determine a scheduling pattern for the operation of the water heater 104. Further, the controller(s) 208 may be configured to output the scheduling pattern at the display interface unit 214 (or the display screen) to receive user inputs on the scheduling pattern. For example, the controller(s) 208 may receive inputs related to modification in the determined scheduling pattern to update the pattern.

Further, the controller(s) 208 may be configured to communicate with the water heater 104 via a wired serial communication bus or a wireless network 220. Further, the controller(s) 208 may be configured to communicate with a storage unit 210 to store data associated with inputs. In an embodiment, the controller(s) 208 may be one or more microprocessor(s).

In some embodiments, the storage unit 210 may store data, instructions executable by the controller(s) 208. The storage unit 210 may further include, but not limited to, a non-transitory computer-readable storage media such as various types of volatile and non-volatile storage media, including but not limited to, random access memory, read-only memory, programmable read-only memory, electrically programmable read-only memory, electrically erasable read-only memory, flash memory, magnetic tape or disk, optical media and the like. Further, the non-transitory computer-readable storage media of the storage unit 210 may include executable instructions in a form of modules and a database to store data. The modules may include a set of instructions that may be executed to cause the thermostat 106 to perform any one or more of the methods disclosed herein throughout the disclosure. Specifically, the one or more modules may be configured to perform the steps of the disclosure using the data stored in the database of the storage unit 210, to control the scheduling pattern and operation of the water heater 104 as discussed herein. In another embodiment, the one or more modules may be a hardware unit which may be outside the storage unit 210. In one embodiment, the storage unit 210 may communicate via a bus within the controller(s) 208.

Further, the display interface unit 214 may be configured to receive one or more inputs from a touch display screen as discussed with respect to Figure 1. The display interface unit 214 may be configured to receive one or more inputs from a user on the scheduling pattern provided at the touch display screen using a finger, pen, etc. Additionally, the display interface unit 214 provides an output on the display interface unit 214 for communicating with the user. In an alternative embodiment, a remote device coupled to the thermostat 106 may be configured provide the one or more inputs to the thermostat 106 via a wired or wireless mode through a similar display screen provided on such remote devices. In one example, the thermostat 106 may receive the one or more inputs remotely via a cloud network (not shown) and processed at the controller(s) 208. The inputs may be provided by the user from a remote location over a wireless communication network via the cloud network.

In an embodiment, the water heater 104 may be configured to receive signalling messages from the thermostat 106, via a wired or wireless communication network 220. Further, in response to receipt of the signalling message from the thermostat 106, the water heater 104 may be configured to operate the water heater based on the scheduling pattern.

Further, in one embodiment, the communication interface 218 of the thermostat 106 may be configured to be in communication with the machine learning neural network stored at a cloud network.

For the sake of brevity, the architecture and standard operations of the transceiver 212, controller(s) 208, display interface unit 214, storage unit 210, sensors 202, water tank 204, and water inlet/outlet 206 are not discussed in detail.

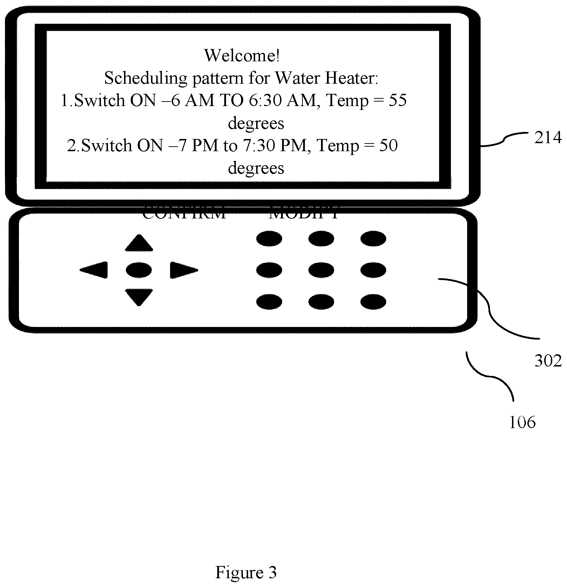

**Figure 3** illustrates a touch display interface 214 of the thermostat 106 to receive one or more inputs regarding a determined scheduling pattern for a water heater 104. The touch display interface 214 of the thermostat 106 may be configured for user interaction and receiving the one or more inputs or commands or instructions. In particular, the thermostat 106 may be configured to provide the determined scheduling pattern for user inputs or confirmation at the touch display interface 214. Further, the thermostat 106 may be configured to receive, via the touch display interface 214, an input to change one or more parameters in the determined scheduling pattern. Based on the one or more inputs on the determined scheduling pattern, the determined scheduling pattern may be updated to regulate the operation of water heater. Specifically, a user may access the touch display interface 214 on the thermostat 106 to select an option associated with confirming the determined scheduling pattern or provide inputs to modify one or more parameters of the determined scheduling pattern.

Subsequently, an option to modify or confirm the scheduling pattern may be provided on the touch display interface 214. As illustrated in the current example of Fig. 3, the touch display interface may list a scheduling pattern switching ON timings along with a temperature of heated water, which may be selected/modified via a finger/pen at the touch display interface. Alternatively, the user may select one of the options via the one or more physical buttons provided on a control board 302 of the thermostat 106.

Once the user provides the one or more inputs via the touch display interface 214 or physical buttons at the control board 302 for the scheduling pattern, the thermostat may process such input as a trigger to finalize or update the scheduling pattern. The water heater may subsequently be operated based on the finalized scheduling pattern.

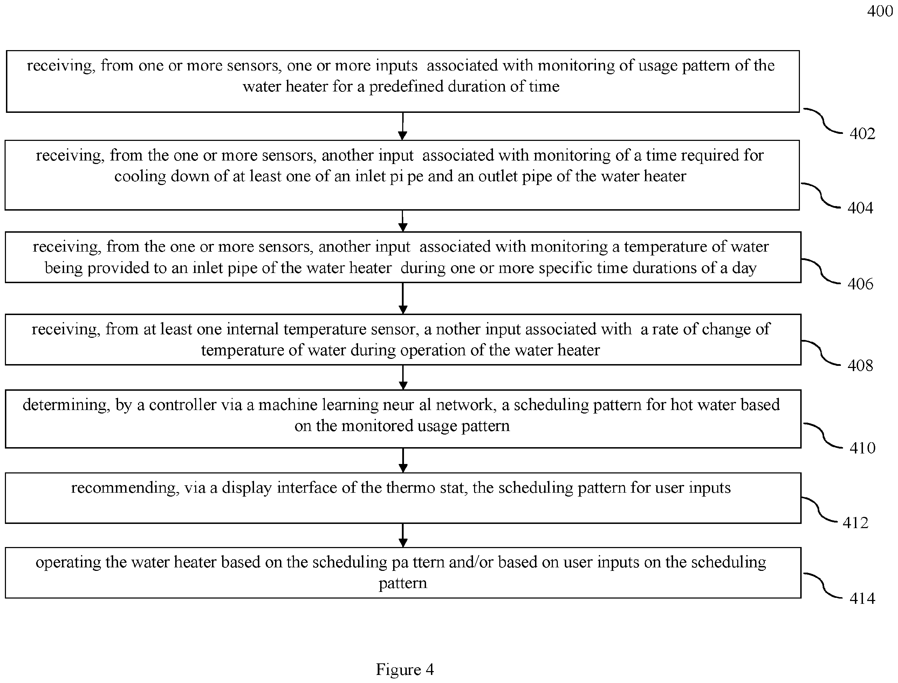

**Figure 4** illustrates a process flow depicting a method 400 for regulating a water heater via a thermostat. In an exemplary embodiment, the steps of the method 400 may be performed by a thermostat.

At step 402, the method 400 comprises receiving, from one or more sensors, one or more inputs associated with monitoring of a usage pattern of the water heater for a predefined duration of time. In an exemplary embodiment, the one or more sensors may include at least one of a pressure sensor, a flow meter, and a temperature sensor. In one embodiment, the receiving further comprises receiving, from the one or more sensors, another input associated with a water usage pattern at one or more of a water inlet or a water outlet of the water heater.

At step 404, the method 400 comprises receiving, from the one or more sensors, another input associated with monitoring of a time required for cooling down of at least one of an inlet pipe and an outlet pipe of the water heater.

At step 406, the method 400 comprises receiving, from the one or more sensors, another input associated with monitoring a temperature of water being provided to an inlet pipe of the water heater during one or more specific time durations of a day.

At step 408, the method 400 comprises receiving, from at least one internal temperature sensor, another input associated with a rate of change of temperature of water during operation of the water heater.

At step 410, the method 400 comprises determining, by a controller via a machine learning neural network, a scheduling pattern for hot water based on the monitored usage pattern. In an embodiment, determining the scheduling pattern comprises determining an amount of water required to be output during operation of the water heater. Further, the scheduling pattern may be determined based on one or more of the monitored time, monitored temperature of water, and rate of change of temperature of water.

At step 412, the method 400 comprises recommending, via a display interface of the thermostat, the scheduling pattern for user inputs.

At step 414, the method 400 comprises operating the water heater based on the scheduling pattern and/or based on user inputs on the scheduling pattern.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A thermostat (106) for regulating a water heater (104), the thermostat (106) comprising:
a receiver configured to receive one or more inputs from one or more sensors (202) configured to monitor, for a predefined duration of time, a usage pattern of the water heater (104); and
a controller (208) configured to:
determine, via a machine learning neural network, a scheduling pattern for hot water based on the monitored usage pattern, and
operate the water heater (104) based on the scheduling pattern.

2. The thermostat (106) of claim 1, wherein the one or more sensors (202) comprises at least one of a pressure sensor, a flow meter, and a temperature sensor.

3. The thermostat (106) of claim 1 or 2, further comprising:
a memory configured to store the machine learning neural network and the inputs received from the one or more sensors (202); and/or
a communication interface (218) configured to be in communication with the machine learning neural network stored at a cloud network (110).

4. The thermostat (106) of any preceding claim, wherein the receiver is further configured to receive another input from the one or more sensors (202) configured to monitor a water usage pattern at one or more of a water inlet (112) or a water outlet (114) of the water heater (104).

5. The thermostat (106) of any preceding claim, wherein to determine the scheduling pattern, the controller (208) is configured to determine an amount of water required to be output during operation of the water heater (104).

6. The thermostat (106) of any preceding claim, wherein the receiver is further configured to receive another input from the one or more sensors (202) configured to monitor a time required for cooling down of at least one of an inlet pipe and an outlet pipe of the water heater (104), and wherein the controller (208) is configured to determine the scheduling pattern based on the monitored time.

7. The thermostat (106) of any preceding claim, wherein the receiver is further configured to receive another input from the one or more sensors (202) configured to monitor a temperature of water being provided to an inlet pipe of the water heater (104) during one or more specific time durations of a day, and wherein the controller (208) is configured to determine the scheduling pattern based on the monitored temperature of water.

8. The thermostat (106) of any preceding claim, wherein the receiver is further configured to receive another input from at least one internal temperature sensor of the water heater (104) configured to determine a rate of change of temperature of water during operation of the water heater (104), and wherein the controller (208) is configured to modify operation of the water heater (104) based on the determined rate of change of temperature of water.

9. A method for regulating a water heater (104) by a thermostat (106), the method comprising:
receiving, from one or more sensors (202), one or more inputs associated with monitoring of a usage pattern of the water heater (104) for a predefined duration of time;
determining, by a controller (208) via a machine learning neural network, a scheduling pattern for hot water based on the monitored usage pattern; and
operating the water heater (104) based on the scheduling pattern.

10. The method of claim 9, wherein the receiving further comprises receiving, from the one or more sensors (202), another input associated with a water usage pattern at one or more of a water inlet (112) or a water outlet (114) of the water heater (104).

11. The method of claim 9 or 10, wherein determining the scheduling pattern comprises determining an amount of water required to be output during operation of the water heater (104).

12. The method of claim 9, 10 or 11 further comprising:
receiving, from the one or more sensors (202), another input associated with monitoring of a time required for cooling down of at least one of an inlet pipe and an outlet pipe of the water heater (104),
wherein determining the scheduling pattern comprises determining the scheduling pattern based on the monitored time.

13. The method of any of claims 9 to 12 further comprising:
receiving, from the one or more sensors (202), another input associated with monitoring a temperature of water being provided to an inlet pipe of the water heater (104) during one or more specific time durations of a day,
wherein determining the scheduling pattern comprises determining the scheduling pattern based on the monitored temperature of water.

14. The method of any of claims 9 to 13, further comprising:
receiving, from at least one internal temperature sensor, another input associated with a rate of change of temperature of water during operation of the water heater (104); and
modifying, by the controller (208), an operation of the water heater (104) based on the rate of change of temperature of water.

15. The method of any of claims 9 to 14, further comprising:
recommending, via a display interface (214) of the thermostat (106), the scheduling pattern for user inputs; and
operating the water heater (104) based on the scheduling pattern in response to receipt of user inputs on the scheduling pattern.
